(19) Europäisches Patentamt
European Patent Office
Office européen des brevets

(11) EP 3 813 991 B1

(12) EUROPEAN PATENT SPECIFICATION

(45) Date of publication and mention of the grant of the patent:
**19.11.2025 Bulletin 2025/47**

(21) Application number: **19739822.5**

(22) Date of filing: **26.06.2019**

(51) International Patent Classification (IPC):
***B01D 67/00*** $^{(2006.01)}$ ***B01D 71/30*** $^{(2006.01)}$

(52) Cooperative Patent Classification (CPC):
**B01D 71/301; B01D 69/06;** B01D 2323/2187

(86) International application number:
**PCT/US2019/039136**

(87) International publication number:
**WO 2020/006019 (02.01.2020 Gazette 2020/01)**

# (54) FLAT SHEET POROUS PVC MEMBRANE

PORÖSE PVC-FLACHFOLIENMEMBRAN

MEMBRANE EN PVC POREUX EN FEUILLE PLATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2018 US 201862690405 P**

(43) Date of publication of application:
**05.05.2021 Bulletin 2021/18**

(73) Proprietor: **Lubrizol Advanced Materials, Inc.**
**Cleveland, OH 44141-3247 (US)**

(72) Inventors:
- **ROY, Kinkini**
  **Cleveland, Ohio 44141-3247 (US)**
- **DECARIA, Domenic C.**
  **Cleveland, Ohio 44141-3247 (US)**
- **JULIUS, Mark D.**
  **Cleveland, Ohio 44141-3247 (US)**

(74) Representative: **Bradley, Josephine Mary**
**Kilburn & Strode LLP**
**Lacon London**
**84 Theobalds Road**
**London WC1X 8NL (GB)**

(56) References cited:
**EP-A1- 2 974 786**
**CN-A- 102 151 491**
**CN-A- 105 251 370**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 813 991 B1

## Description

BACKGROUND OF THE INVENTION

The disclosed technology relates to flat sheet porous membranes prepared from a dope solution containing a chlorinated polyvinyl chloride.

Membrane separation technology is an energy saving, high efficiency physical technology for separations. Membranes have a wide range of applications from drinking water purification, to industrial waste-water purification. Current commercial flat sheet membranes are made from materials that degrade or lose efficiency when exposed to harsh chemicals, such as the bleach solutions used to clean purification systems. As such, the market needs a stable, chemically and temperature resistant membrane.

CN102151491 discloses a modified polyvinyl chloride alloy ultrafiltration membrane, characterized in that the modifier in its film-making solution is a polymer modifier, and the polymer modifier includes methyl methacrylate-methacrylic acid copolymer. CN105251370 discloses a super hydrophobic air filtering membrane. EP2974786 discloses a resin composition comprising the following component (A), component (B), and component (C);

component (A) : a membrane-forming polymer,
component (B): a polymer obtained by polymerizing a monomer composition containing a (meth)acrylic acid ester macromonomer (b1) represented by the following Formula (1) and another monomer (b2), and
component (C): a polymer containing a vinylpyrrolidone unit;

[Chem. 1]

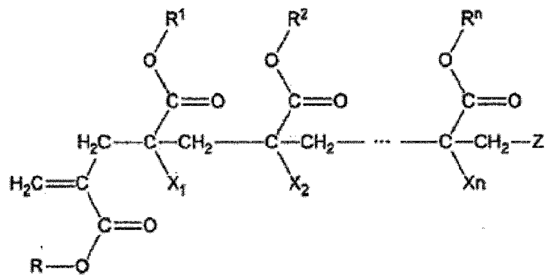

(1)

(in Formula (1) above, R and $R^1$ to $R^n$ each independently represent a hydrogen atom, an alkyl group, a cycloalkyl group, an aryl group, or a heterocyclic group, $X_1$ to $X_n$ each independently represent a hydrogen atom or a methyl group, Z represents a terminal group, and n represents a natural number of from 3 to 10,000).

SUMMARY OF THE INVENTION

The disclosed technology, therefore, solves the problem of chemical degradation of filtration membrane by providing a dope solution of a polyvinyl chloride polymer from which to prepare a porous flat sheet membrane.

One aspect of the invention is directed to a dope solution for preparing a porous flat sheet membrane. The dope solution is defined in the appended claims and includes at least one polymer of vinyl chloride, at least one pore forming agent, and at least one solvent.

In an example embodiment, the polymer of vinyl chloride can be present in the dope solution at a concentration of from about 10 to about 40 wt%. The dope solution can also contain the pore forming agent at a concentration of from about 1 to about 20 wt%. The solvent may be present at a concentration of from about 30 to about 90 wt%.

The dope solution can also contain processing aids such as surfactants, drying agents, catalysts, co-solvents, such as polar aprotic solvents, or any combination thereof.

In addition to the polymer of vinyl chloride, the dope solution can include additional polymers, such as, for example, an oligomeric or polymeric additive formed from two or more of: i) a zwitterionic monomer or a polyalkylene glycol monomer; ii) a silicone or fluorocarbon monomer, or combinations thereof; or iii) an alky 1 substituted methacrylate, acrylate, acrylamide, or vinyl monomer, or combinations thereof. The dope solution according to the invention includes a polyurethane polymer, such as, for example, a polyurethane polymer containing (a) poly(alkylene oxide) side-chain units, and (b) poly(ethylene oxide) main-chain units.

Another aspect of the invention is directed toward a flat sheet porous membrane. The flat sheet porous membrane includes a flat sheet cast from the dope solution described herein.

The porous flat sheet membrane can have pores suitable for microfiltration. The porous flat sheet membrane can have pores suitable for ultrafiltration. The porous flat sheet membrane can have pores suitable for nanofiltration.

The membrane can have either an asymmetric pore distribution or symmetric pore distribution. Likewise, the membrane can have skin layer or no skin layer. In an embodiment, the membrane can have an integral skin layer.

Another aspect of the invention is directed toward a method for manufacturing the flat sheet porous membrane. The method can include preparing a dope solution as described herein, casting a flat sheet of the doping solution on a surface, and immersing the flat sheet of the doping solution in a quenching environment for a sufficient period to allow phase inversion.

In an embodiment, the quenching environment can include a coagulation bath having water, and optionally at least one solvent. In another embodiment, the quenching environment can include a vapor diffusion chamber. In a further embodiment, the quenching environment can include a solvent diffusion chamber.

An additional aspect of the invention is directed toward a method of treating an effluent stream by filtering the effluent through the flat sheet porous membrane described herein. In an embodiment, the effluent stream can include a gas in gas stream. In an embodiment, the effluent stream can include a gas in liquid stream. In an embodiment, the effluent stream can include a liquid in liquid stream. In another embodiment, the effluent stream can include suspended solids in liquid stream.

## DETAILED DESCRIPTION OF THE INVENTION

Various preferred features and embodiments will be described below.

## DOPE SOLUTION

There is provided, in one aspect of the disclosed technology, a dope solution for preparing a porous flat sheet membrane. The dope solution is defined in the appended claims and includes at least one polymer of vinyl chloride, at least one pore forming agent, and at least one solvent.

The dope solution provided herein contains, at least in part, a polymer of vinyl chloride, wherein the polymer of vinyl chloride is chlorinated polyvinyl chloride ("CPVC").

CPVC resins are both known to the art and to the literature and are commercially available. CPVC can be prepared by chlorinating PVC resin and there are considerations pertaining to the PVC, whether it being used in the dope solution itself, and ultimately the flat sheet porous membrane itself, or as a precursor from which a CPVC product may be derived for use in the dope solution/flat sheet porous membrane. The molecular weight of PVC suitable for the dope solution/membrane, as indicated by inherent viscosity (I.V.) measurement per ASTM D1243, should generally range from about 0.4 to about 1.4 at the extremes. Desirably, the I.V. of the PVC employed (itself, or as precursor to the CPVC) falls within a range of from about 0.6 to about 1.4, or from about 0.5 to 1.3, or even from about 0.54 to 1.2, or about 0.6 to 1.1, and in some embodiments from about 0.65 to 0.90 or 0.92, or even from about 0.65 to 1.

CPVC resin used for the done solution/membrane has a chlorine content of from about 59.0 to about 72.0 wt%, or from about 60.0 to about 70.0 or 71.0 wt%, and even from about 63.0 to about 68.0 or 69.0 wt%, or between about 64.0 or 65.0 and 67.0 wt%.

The dope solution can contain CPVC at a concentration of from about 10 to about 40 wt%, or for example, about 15 to 30 wt%, or even from about 18 to 25 wt%.

Other polymers can be included in the dope solution along with the CPVC. Other polymers include the polyurethane polymer which is required in the dope solution. These other polymers may be included in the dope solution at a concentration of from about 0.1 to about 15 wt% of the dope solution. The other polymers may also be included in the dope solution at a concentration of from about 0.5 to about 12 wt%, or 1 to 10 wt%. Examples of other polymers include, for example, surface-modified polymers. Examples of polyurethane polymer include thermoplastic polyurethanes.

In one embodiment, the dope solution can contain the CPVC or a combination of CPVC and PVC and a surface-modified polymer composition formed from an oligomeric or polymeric additive and a base polymer, such as that described in WO2106/172460A1, published October 27, 2016. More particularly, the surface modified polymer composition can be an oligomeric or polymeric additive formed from two or more of: i) a zwitterionic monomer or a polyalkylene glycol monomer; ii) a silicone or fluorocarbon monomer, or combinations thereof; or iii) an alky substituted methacrylate, acrylate, acrylamide, or vinyl monomer, or combinations thereof.

The surface-modified polymer composition as disclosed herein can include an oligomeric or polymeric additive formed from i) a zwitterionic monomer, such as, for example, a phosphorylcholine, a carboxybetaine, a sulfobetaine, or a polyalkylene glycol monomer. In some embodiments, the zwitterionic monomers incorporated into the oligomeric or polymeric additives are present in an amount from 10-40 mole percent of the total monomer composition of the additive.

In one embodiment, the oligomeric or polymeric additive can further, or alternatively, include a polyalkylene glycol monomer. Suitable polyalkylene glycol monomers include, but are not limited to acrylate, methacrylate esters of polyether polyols having a total of from 2 to 100 carbon atoms. In some embodiments, the polyalkylene glycol monomer can be present in an amount from about 10 mole % to about 50 mole % of the total monomer composition of the additive.

The oligomeric or polymeric additive of the surface-modified polymer composition can also include a bloom-promoting monomer. The bloom-promoting monomer can include a silicone or fluorocarbon monomer, or combinations thereof, such as, for example, a functionalized polysiloxane, such as mono- or multi-functionalized acrylate, methacrylate, vinyl or allyl functionalized polysiloxanes, mono vinyl terminated polydimethylsiloxanes; mono methacryloxypropyl terminated polydimethylsiloxanes, vinyl terminated trifluoropropylmethylsiloxane; and monoallyl-mono trimethylsiloxy terminated polyethylene oxide.

In some embodiments, the oligomeric or polymeric additive can include a fluorocarbon monomer. The fluorocarbon monomer may be represented by the following formula:

D-E-F

wherein D is a polymerizable group selected from acrylate, methacrylate or vinyl or an active hydrogen group selected from an alcohol, an amine or a thiol, E is an optional linking group; and F is fluorocarbon group which can be perfluorinated or partially fluorinated. The silicone or fluorocarbon monomer can be present, in one embodiment, in an amount from about 5% to about 40% of the total monomer composition of the additive.

The amount of the various monomers used to make the oligomeric or polymeric additive of the surface modified polymer composition are typically in the range of 10-60 mole percent of the total additive composition. The amount of each specific monomer which is useful in the invention will depend on which specific monomer from each class of monomers is used and the base polymer into which the additive is being blended. For example, for a PTMEG based aromatic thermoplastic polyurethane polymer, additives which contain from about 10 to about 30 mole percent of a fluorocarbon methacrylates, from about 10 to about 30 percent of polyethyleneglycol methacrylate and from about 40 to about 80 percent of methylmethacrylate has been shown to be effective to impart non-fouling and/or non-thrombogenic surfaces to the TPU base polymer with which it is blended.

The oligomeric or polymeric additive may be formed via addition polymerization (radical, cationic and ionic) or condensation polymerization.

The surface modified polymer composition also includes a base polymer. In some embodiments, the base polymer includes a thermoplastic polyurethane, a polyamide, a polyethylene, a polyester, a polyvinylchloride, a polysulfone, a polysiloxane, a polyether sulfone, a polyether ether ketone (PEEK), a polycaprolactone, a polydioxanone, a poly(1,3-trimethylene) carbonate, a polytyrosine carbonate, a polyacrylate, a polymethacrylate, polylactic acid, polyglycolic acid, a polypropylene, a polycarbonate, a polyketone, a polyamine, polyimine, and combinations thereof.

The surface-modified polymer composition may be prepared by melt processing of the additive into the polymer, incorporation of the additive during polymer synthesis, casting, spinning, precipitating or coagulating a solvent mixture containing the additive and the polymer, or coating of the polymer composition onto a material.

Also disclosed is that the dope solution can contain CPVC or combination of CPVC and PVC and a thermoplastic polyurethane ("TPU"). It is well understood by those skilled in the art that "polyurethane" is a generic term used to describe polymers obtained by reacting isocyanates with at least one hydroxyl-containing compound, amine-containing compound, or mixture thereof. It also is well understood by those skilled in the art that polyurethanes can also include allophanate, biuret, carbodiimide, oxazolidinyl, isocyanurate, uretdione, and other linkages in addition to urethane and urea linkages.

The TPUs suitable for the dope solution/membrane will include at least one polyisocyanate. Polyisocyanates have an average of about two or more isocyanate groups, preferably an average of about two to about four isocyanate groups and include aliphatic, cycloaliphatic, araliphatic, and aromatic polyisocyanates, used alone or in mixtures of two or more. Diisocyanates are more preferred.

Specific examples of suitable aliphatic polyisocyanates include alpha, omega-alkylene diisocyanates having from 5 to 20 carbon atoms, such as hexamethylene-1,6-diisocyanate, 1,12-dodecane diisocyanate, 2,2,4-trimethyl-hexamethylene diisocyanate, 2,4,4-trimethyl-hexamethylene diisocyanate, 2-methyl-1,5-pentamethylene diisocyanate, and the like. Polyisocyanates having fewer than 5 carbon atoms can be used but are less preferred because of their high volatility and toxicity. Preferred aliphatic polyisocyanates include hexamethylene-1,6-diisocyanate, 2,2,4-trimethyl-hexamethylene-diisocyanate, and 2,4,4-trimethyl-hexamethylene diisocyanate.

Specific examples of suitable cycloaliphatic polyisocyanates include dicyclohexylmethane diisocyanate, (commercially available as Desmodur™ W from Bayer Corporation), isophorone diisocyanate, 1,4-cyclohexane diisocyanate, 1,3-bis-(isocyanatomethyl) cyclohexane, and the like. Preferred cycloaliphatic polyisocyanates include dicyclohexylmethane diisocyanate and isophorone diisocyanate.

Specific examples of suitable araliphatic polyisocyanates include m-tetramethyl xylylene diisocyanate, p-tetramethyl xylylene diisocyanate, 1,4-xylylene diisocyanate, 1,3-xylylene diisocyanate, and the like. A preferred araliphatic polyisocyanate is tetramethyl xylylene diisocyanate.

Examples of suitable aromatic polyisocyanates include 4,4'-diphenylmethylene diisocyanate), toluene diisocyanate, their isomers, naphthalene diisocyanate, and the like. A preferred aromatic polyisocyanate is toluene diisocyanate.

The TPUs suitable for the dope solution/membrane can also include at least one active hydrogen-containing

compound. The term "active hydrogen-containing" refers to compounds that are a source of active hydrogen and that can react with isocyanate groups via the following reaction: -NCO+H-X $\rightarrow$ -NH-C(=O)-X. Examples of suitable active hydrogen-containing compounds include but are not limited to polyols, poythiols and polyamines.

The term "polyol" denotes any high molecular weight product having an average of about two or more hydroxyl groups per molecule. Examples of such polyols include higher polymeric polyols such as polyester polyols and polyether polyols, as well as polyhydroxy polyester amides, hydroxyl-containing polycaprolactones, hydroxyl-containing acrylic interpolymers, hydroxyl-containing epoxides, polyhydroxy polycarbonates, polyhydroxy polyacetals, polyhydroxy polythioethers, polysiloxane polyols, ethoxylated polysiloxane polyols, polybutadiene polyols and hydrogenated polybutadiene polyols, polyacrylate polyols, halogenated polyesters and polyethers, and the like, and mixtures thereof. The polyester polyols, polyether polyols, polycarbonate polyols, polysiloxane polyols, and ethoxylated polysiloxane polyols are preferred.

A preferred polyester polyol is a diol. Preferred polyester diols include poly(butanediol adipate); hexane diol adipic acid and isophthalic, acid polyesters such as hexane adipate isophthalate polyester; hexane diol neopentyl glycol adipic acid polyester diols, as well as propylene glycol maleic anhydride adipic acid polyester diols, and hexane diol neopentyl glycol fumaric acid polyester diols.

Polyether diols may be substituted in whole or in part for the polyester diols. Preferred polyethers include poly(propylene glycol), polytetrahydrofuran, and copolymers of poly(ethylene glycol) and poly(propylene glycol).

Polycarbonates include those obtained from the reaction of (A) diols such 1,3-propanediol, 1,4-butanediol, 1,6-hexanediol, diethylene glycol, triethylene glycol, tetraethylene glycol, and the like, and mixtures thereof with (B) diarylcarbonates such as diphenylcarbonate or phosgene.

Polyacetals include the compounds that can be prepared from the reaction of (A) aldehydes, such as formaldehyde and the like, and (B) glycols such as diethylene glycol, triethylene glycol, ethoxylated 4,4'-dihydroxydiphenyldimethylmethane, 1,6-hexanediol, and the like. Polyacetals can also be prepared by the polymerization of cyclic acetals.

Instead of a long-chain polyol, a long-chain amine may also be used to prepare the TPU. Suitable long-chain amines include polyester amides and polyamides, such as the predominantly linear condensates obtained from reaction of (A) polybasic saturated and unsaturated carboxylic acids or their anyhydrides, and (B) polyvalent saturated or unsaturated aminoalcohols, diamines, polyamines, and the like, and mixtures thereof.

Diamines and polyamines are among the preferred compounds useful in preparing the aforesaid polyester amides and polyamides. Suitable diamines and polyamines include 1,2-diaminoethane, 1,6-diaminohexane, 2-methyl-1,5-pentanediamine, 2,2,4-trimethyl-1,6-hexanediamine, 1,12-diaminododecane, 2-aminoethanol, 2-[(2-aminoethyl)amino]-ethanol, piperazine, 2,5-dimethylpiperazine, 1-amino-3-aminomethyl-3,5,5-trimethylcyclohexane (isophorone diamine or IPDA), bis-(4-aminocyclohexyl)-methane, bis-(4-amino-3-methyl-cyclohexyl)-methane, 1,4-diaminocyclohexane, 1,2-propylenediamine, hydrazine, urea, amino acid hydrazides, hydrazides of semicarbazidocarboxylic acids, bis-hydrazides and bis-semicarbazides, diethylene triamine, triethylene tetramine, tetraethylene pentamine, pentaethylene hexamine, N,N,N-tris-(2-aminoethyl)amine, N-(2-piperazinoethyl)-ethylene diamine, N,N'-bis-(2-aminoethyl)-piperazine, N,N,N'-tris-(2-aminoethyl)ethylene diamine, N-[N-(2-aminoethyl)-2-aminoethyl]-N'-(2-aminoethyl)-piperazine, N-(2-aminoethyl)-N'-(2-piperazinoethyl)-ethylene diamine, N,N-bis-(2-aminoethyl)-N-(2-piperazinoethyl)amine, N,N-bis-(2-piperazinoethyl)-amine, polyethylene imines, iminobispropylamine, guanidine, melamine, N-(2-aminoethyl)-1,3-propane diamine, 3,3'-diaminobenzidine, 2,4,6-triaminopyrimidine, polyoxypropylene amines, tetrapropylenepentamine, tripropylenetetramine, N,N-bis-(6-aminohexyl)amine, N,N'-bis-(3-aminopropyl)ethylene diamine, and 2,4-bis-(4'-aminobenzyl)-aniline, and the like, and mixtures thereof. Preferred diamines and polyamines include 1-amino-3-aminomethyl-3,5,5-trimethyl-cyclohexane (isophorone diamine or IPDA), bis-(4-aminocyclohexyl)-methane, bis-(4-amino-3-methylcyclohexyl)-methane, ethylene diamine, diethylene triamine, triethylene tetramine, tetraethylene pentamine, and pentaethylene hexamine, and the like, and mixtures thereof. Other suitable diamines and polyamines include Jeffamine® D-2000 and D-4000, which are amine-terminated polypropylene glycols, differing only by molecular weight, and which are available from Huntsman Chemical Company.

The TPU may include side-chains prepared, for example, from alkylene oxides. As used herein, the term "alkylene oxide" includes both alkylene oxides and substituted alkylene oxides having 2 to 10 carbon atoms. The active hydrogen-containing compounds can have poly(alkylene oxide) side chains sufficient in amount to comprise about 12 wt. % to about 80 wt. %, preferably about 15 wt. % to about 60 wt. %, and more preferably about 20 wt. % to about 50 wt. %, of poly(alkylene oxide) units in the TPU on a dry weight basis. At least about 50 wt. %, preferably at least about 70 wt. %, and more preferably at least about 90 wt. % of the poly(alkylene oxide) side-chain units comprise poly(ethylene oxide), and the remainder of the side-chain poly(alkylene oxide) units can comprise alkylene oxide and substituted alkylene oxide units having from 3 to about 10 carbon atoms, such as propylene oxide, tetramethylene oxide, butylene oxides, epichlorohydrin, epibromohydrin, allyl glycidyl ether, styrene oxide, and the like, and mixtures thereof.

Preferably such active hydrogen-containing compounds provide less than about 25 wt. %, more preferably less than about 15 wt. % and most preferably less than about 5 wt. % poly(ethylene oxide) units in the backbone (main chain)

based upon the dry weight of TPU. Preferably the amount of the side-chain units is (i) at least about 30 wt. % when the molecular weight of the side-chain units is less than about 600 grams/mole, (ii) at least about 15 wt. % when the molecular weight of the side-chain units is from about 600 to about 1,000 grams/mole, and (iii) at least about 12 wt. % when the molecular weight of said side-chain units is more than about 1,000 grams/mole. Mixtures of active hydrogen-containing compounds having such poly(alkylene oxide) side chains can be used with active hydrogen-containing compounds not having such side chains.

Preferably the TPU also have reacted therein at least one active hydrogen-containing compound not having said side chains and typically ranging widely in molecular weight from about 50 to about 10,000 grams/mole, preferably about 200 to about 6,000 grams/mole, and more preferably about 300 to about 3,000 grams/mole. Suitable active-hydrogen containing compounds not having said side chains include any of the amines and polyols described.

The ratio of isocyanate to active hydrogen in the TPU typically ranges from about 1.3/1 to about 2.5/1, preferably from about 1.5/1 to about 2.1/1, and more preferably from about 1.7/1 to about 2/1.

The TPU may also include compounds having at least one crosslinkable functional group. Compounds having at least one crosslinkable functional group include those having carboxylic, carbonyl, amine, hydroxyl, and hydrazide groups, and the like, and mixtures of such groups. The typical amount of such optional compound is up to about 1 milliequivalent, preferably from about 0.05 to about 0.5 milliequivalent, and more preferably from about 0.1 to about 0.3 milliequivalent per gram of TPU on a dry weight basis.

The preferred monomers for incorporation into the TPU are hydroxy-carboxylic acids having the general formula $(HO)_xQ(COOH)_y$, wherein Q is a straight or branched hydrocarbon radical having 1 to 12 carbon atoms, and x and y are 1 to 3. Examples of such hydroxy-carboxylic acids include citric acid, dimethylolpropionic acid (DMPA), dimethylol butanoic acid (DMBA), glycolic acid, lactic acid, malic acid, dihydroxymalic acid, tartaric acid, hydroxypivalic acid, and the like, and mixtures thereof. Dihydroxy-carboxylic acids are more preferred with dimethylolpropanoic acid (DMPA) being most preferred.

Other suitable compounds providing crosslinkability include thioglycolic acid, 2,6-dihydroxybenzoic acid, and the like, and mixtures thereof.

The formation of the TPU may be achieved without the use of a catalyst. However, a catalyst is preferred in some instances. Examples of suitable catalysts include stannous octoate, dibutyl tin dilaurate, and tertiary amine compounds such as triethylamine and bis-(dimethylaminoethyl) ether, morpholine compounds such as β,β'-dimorpho-linodiethyl ether, bismuth carboxylates, zinc bismuth carboxylates, iron (III) chloride, potassium octoate, potassium acetate, and DABCO® (diazabicyclo[2.2.2]octane), from Air Products. The preferred catalyst is a mixture of 2-ethylhexanoic acid and stannous octoate, e.g., FASCAT® 2003 from Elf Atochem North America. The amount of catalyst used is typically from about 5 to about 200 parts per million of the total weight of prepolymer reactants.

Optional neutralization of the prepolymer having pendant carboxyl groups converts the carboxyl groups to carboxylate anions, thus having a water-dispersibility enhancing effect. Suitable neutralizing agents include tertiary amines, metal hydroxides, ammonium hydroxide, phosphines, and other agents well known to those skilled in the art. Tertiary amines and ammonium hydroxide are preferred, such as triethyl amine (TEA), dimethyl ethanolamine (DMEA), N-methyl morpholine, and the like, and mixtures thereof. It is recognized that primary or secondary amines may be used in place of tertiary amines, if they are sufficiently hindered to avoid interfering with the chain extension process.

The TPU may include a chain extender. As a chain extender, at least one of water, inorganic or organic polyamine having an average of about 2 or more primary and/or secondary amine groups, polyalcohols, ureas, or combinations thereof is suitable for use in the present invention. Suitable organic amines for use as a chain extender include diethylene triamine (DETA), ethylene diamine (EDA), meta-xylylenediamine (MXDA), aminoethyl ethanolamine (AEEA), 2-methyl pentane diamine, and the like, and mixtures thereof. Also suitable for practice in the present invention are propylene diamine, butylene diamine, hexamethylene diamine, cyclohexylene diamine, phenylene diamine, tolylene diamine, 3,3-dichlorobenzidene, 4,4'-methylene-bis-(2-chloroaniline), 3,3-dichloro-4,4-diamino diphenylmethane, sulfonated primary and/or secondary amines, and the like, and mixtures thereof. Suitable inorganic amines include hydrazine, substituted hydrazines, and hydrazine reaction products, and the like, and mixtures thereof. Suitable polyalcohols include those having from 2 to 12 carbon atoms, preferably from 2 to 8 carbon atoms, such as ethylene glycol, diethylene glycol, neopentyl glycol, butanediols, hexanediol, and the like, and mixtures thereof. Suitable ureas include urea and it derivatives, and the like, and mixtures thereof. Hydrazine is preferred and is most preferably used as a solution in water. The amount of chain extender typically ranges from about 0.5 to about 0.95 equivalents based on available isocyanate.

The TPU can be prepared in the presence of a plasticizer. Plasticizers well known to the art can be selected for use in this invention according to parameters such as compatibility with the particular polyurethane and desired properties of the final composition, such as those listed in WIPO Publication WO 02/08327 A1 (incorporated herein by reference in its entirety). The plasticizers typically are used in amounts from about 2 wt. % to about 100 wt. %, preferably from about 5 to about 50 wt. %, and more preferably from about 5 to about 30 wt. %, based on polyurethane dry weight. The optimum amount of plasticizer is determined according to the particular application, as is well known to those skilled in the art.

Suitable plasticizers include ester derivatives of such acids and anhydrides as adipic acid, azelaic acid, benzoic

acid, citric acid, dimer acids, fumaric acid, isobutyric acid, isophthalic acid, lauric acid, linoleic acid, maleic acid, maleic anyhydride, melissic acid, myristic acid, oleic acid, palmitic acid, phosphoric acid, phthalic acid, ricinoleic acid, sebacic acid, stearic acid, succinic acid, 1,2-benzenedicarboxylic acid, and the like, and mixtures thereof. Also suitable are epoxidized oils, glycerol derivatives, paraffin derivatives, sulfonic acid derivatives, and the like, and mixtures thereof and with the aforesaid derivatives. Specific examples of such plasticizers include diethylhexyl adipate, heptyl nonyl adipate, diisodecyl adipate, the adipic acid polyesters, dicapryl adipate, dimethyl azelate, diethylene glycol dibenzoate and dipropylene glycol dibenzoate, polyethylene glycol dibenzoate, 2,2,4-trimethyl-1,3-pentanediol monoisobutyrate benzoate, 2,2,4-trimethyl-1,3-pentanediol diisobutyrate, methyl (or ethyl, or butyl) phthalyl ethyl glycolate, triethyl citrate, dibutyl fumarate, 2,2,4-trimethyl-1,3-pentanediol diisobutyrate, methyl laurate, methyl linoleate, di-n-butyl maleate, tricapryl trimellitate, heptyl nonyl trimellitate, triisodecyl trimellitate, triisononyl trimellitate, isopropyl myristate, butyl oleate, methyl palmitate, tricresyl phosphate, dimethyl phthalate, diethyl phthalate, dibutyl phthalate, diisobutyl phthalate, di-2-ethylhexyl phthalate, octyl decyl phthalate, diisodecyl phthalate, heptyl nonyl phthalate, diundecyl phthalate, ditridecyl phthalate, dicyclohexyl phthalate, diphenyl phthalate, butyl benzyl phthalates such as the n-butylbenzyl ester of o-phthalic acid, isodecyl benzyl phthalate, alkyl ($C_7$/$C_9$) benzyl phthalate, dimethoxyethyl phthalate, 7-(2,6,6,8-tetramethyl-4-oxa-3-oxononyl) benzyl phthalate, di-2-ethylhexyl sebacate, butyl ricinoleate, dimethyl sebacate, methyl stearate, diethyl succinate, the butyl phenylmethyl ester of 1,2-benzenedicarboxylic acid, epoxidized linseed oil, glycerol triacetate, chloroparaffins having about 40% to about 70% Cl, o,p-toluenesulfonamide, N-ethyl p-toluene sulfonamide, N-cyclohexyl p-toluene sulfonamide, sulfonamide-formaldehyde resin, and the like, and mixtures thereof. Other suitable plasticizers known to those skilled in the art include castor oil, sunflower seed oil, soybean oil, aromatic petroleum condensate, partially hydrogenated terphenyls, silicone plasticizers such as dimethicone copolyol esters, dimethiconol esters, silicone carboxylates, guerbet esters, and the like, alone or as mixtures with other plasticizers.

Examples of suitable reactive plasticizers include compositions and mixtures having ethylenic unsaturation, such as triallyl trimellitate (TATM), Stepanol PD-200LV (a mixture of (1) unsaturated oil and (2) polyester diol reaction product of o-phthalic acid and diethylene glycol from Stepan Company), and the like, and mixtures thereof. Other suitable reactive plasticizers include epoxidized plasticizers, including certain monofuctional and polyfunctional glycidyl ethers such as polyglycidyl ether of castor oil and dimer acid diglycidyl ether, and the like, and mixtures thereof.

Examples of suitable flame retardant plasticizers include phosphorus-based plasticizers such as cyclic phosphates, phosphites, and phosphate esters, tricresyl phosphate, trixylenyl phosphate, cyclic phosphate esters, tar acid, cresol, xylyl, phenol phosphates, and trixylyl phosphate; halogenated aryl esters; chlorinated biphenyl, 2-ethylhexyl diphenyl phosphate, isodecyl diphenyl phosphate, triphenyl phosphate, cresyl diphenyl phosphate, p-t-butylphenyl diphenyl phosphate, triphenyl phosphite, and the like. Other examples of phosphorus-based plasticizers include chlorinated alkyl phosphate esters chloro alkyl diphosphate ester; alkyl phosphates and phosphites such as tributyl phosphate, tri-2-ethylhexyl phosphate, and triisoctyl phosphite; other organophosphates and organophosphites such as tributoxy ethylphosphate; other phosphates and phosphonates such as chlorinated diphosphate and chlorinated polyphosphonate; and the like. Mixtures can also be used.

Examples of suitable wetting, emulsifying, and conditioning plasticizers include alkyloxylated fatty alcohol phosphate esters such as oleth-2 phosphate, oleth-3 phosphate, oleth-4 phosphate, oleth-10 phosphate, oleth-20 phosphate, ceteth-8 phosphate, ceteareth-5 phosphate, ceteareth-10 phosphate, PPG ceteth-10 phosphate, and the like, and mixtures thereof.

Other additives well known to those skilled in the art can be used to aid in preparation of the TPU. Such additives include surfactants, stabilizers, defoamers, antimicrobial agents, antioxidants, UV absorbers, carbodiimides, and the like.

The TPU can be processed by methods well known to those skilled in the art to make articles having excellent breathability, i.e., moisture vapor transmission rates ("MVTR"). Suitable MVTR's typically are an upright MVTR of at least about 500 grams/$m^2$/24 hours, preferably at least about 600 grams/$m^2$/24 hours, and more preferably at least about 700 grams/$m^2$/24 hours grams/$m^2$/24 hours. The term "breathable" is used herein to denote such excellent MVTR. Similarly, the term "breathability" is used as an indication of the MVTR of a particular composition or article and is described more particularly as excellent (above about 500 grams/$m^2$/24 hours) or inferior (below about 500 grams/$m^2$/24 hours).

The TPU can be prepared by:

(A) reacting to form an isocyanate-terminated prepolymer (1) at least one polyisocyanate having an average of about two or more isocyanate groups; (2) at least one active hydrogen-containing compound comprising (a) poly(alkylene oxide) side-chain units in an amount comprising about 12 wt. % to about 80 wt. % of said TPU, wherein (i) alkylene oxide groups in said poly(alkylene oxide) side-chain units have from 2 to 10 carbon atoms and are unsubstituted, substituted, or both unsubstituted and substituted, (ii) at least about 50 wt. % of said alkylene oxide groups are ethylene oxide, and (iii) said amount of said side-chain units is at least about 30 wt. % when the molecular weight of said side-chain units is less than about 600 grams/mole, at least about 15 wt. % when the molecular weight of said side-chain units is from about 600 to about 1,000 grams/mole, and at least about 12 wt. % when the molecular weight of said side-chain units is more than about 1,000 grams/mole, and (b) poly(ethylene oxide) main-chain units in an

amount comprising less than about 25 wt. % of said TPU; (3) preferably at least one other active hydrogen-containing compound not containing poly(alkylene oxide) side-chain units; and (4) optionally at least one compound having at least one crosslinkable functional group, in order to form an isocyanate-terminated prepolymer;

(B) dispersing said prepolymer in water, and chain extending said prepolymer by reaction with at least one of water, inorganic or organic polyamine having an average of about 2 or more primary and/or secondary amine groups, polyalcohols, ureas, or combinations thereof; and

(C) thereafter further processing the chain-extended dispersion of step (B) in order to form a composition or article having an upright moisture vapor transmission rate (MVTR) of more than about 500 gms/$m^2$/24 hr.

The dope solution provided herein also contains at least one pore forming agent. A pore-forming agent is a substance that is soluble in the blend solvent (described below) and that may or may not be soluble in the coagulation solvent (described below). The presence of a pore-forming agent can provide for greater control over the size and distribution of pores in the porous flat sheet membrane that is formed from the coagulation in the coagulation bath. The pore-forming agent in its pure state at room temperature can be a liquid, but is often a water-soluble solid. Examples of pore-forming agents suitable for the dope solution/membrane include salts and phenols. For example, salts of alkali metals, alkaline earth metals, transition metals or ammonium with halides or carbonates can be used as pore-forming agents. Specific examples include ammonium chloride, calcium chloride, magnesium chloride, lithium chloride, sodium chloride, zinc chloride, calcium carbonate, magnesium carbonate, sodium carbonate, and sodium bicarbonate. Sodium citrate can also be used as a pore forming agent. Examples of phenols include phenol, ethylphenol, catechol, resorcinol, hydroquinone and methoxyphenol. Other conventional pore-forming agents include non-solvent liquids and also include polymers such as poly(vinyl alcohol), poly(vinyl pyrrolidone), glycols, such as as polyethylene glycol, oxide copolymers, such as polyethylene-polyethyelene oxide copolymers, and the like, and hydroxyalkylcellulose polymers.

The molecular weight of the pore forming agent, in some embodiments, can have an effect on the size of the pores formed in the flat sheet porous membrane. Normally the pore size of membranes increases with increasing molecular weight of the pore former, but this is not always a hard rule on this. Sometimes, pore size/pore distribution reaches an optimum value and it does not increase with an increase in pore former molecular weight. The effect of molecular weight varies from pore former to pore former.

In an embodiment, the pore forming agent can be a polyvinyl pyrrolidone having a molecular weight of from about 8000 to about 150,000. In certain instances, such as for preparing a microfiltration or ultrafiltration membrane, the pore former may be a polyvinyl pyrrolidone having a molecular weight of from about 40,000 to about 150,000. In other instances, such as for preparing a nanofiltration membrane, the polyvinyl pyrrolidone pore forming agent may have a molecular weight of from about 200 to about 40,000.

In an embodiment, the pore forming agent can be a poly(ethylene glycol)-block-poly(propylene glycol)-block-poly(ethylene glycol) copolymer having a molecular weight of from about 1000 to about 6000. In certain instances, such as for preparing a microfiltration membrane, the pore former may be a poly(ethylene glycol)-block-poly(propylene glycol)-block-poly(ethylene glycol) copolymer having a molecular weight of from about 3000 to about 6000. In other instances, such as for preparing an ultrafiltration membrane, the poly(ethylene glycol)-block-poly(propylene glycol)-block-poly(ethylene glycol) copolymer pore forming agent may have a molecular weight of from about 2000 to about 4000. In other instances, such as for preparing a nanofiltration membrane, the poly(ethylene glycol)-block-poly(propylene glycol)-block-poly(ethylene glycol) copolymer pore forming agent may have a molecular weight of from about 1000 to about 2000.

In an embodiment, the pore forming agent can be a polyethylene glycol having a molecular weight of from about 200 to about 20,000. In certain instances, such as for preparing a microfiltration membrane, the pore former may be a polyethylene glycol having a molecular weight of from about 8000 to about 20,000. In other instances, such as for preparing an ultrafiltration or nanofiltration membrane, the polyethylene glycol pore forming agent may have a molecular weight of from about 200 to about 10,000.

The pore forming agent can present in the dope solution at a concentration of from about 1 to about 20 wt%, or from about 2 to about 18 wt%, or from about 4 to about 16 wt%, or even from about 5 to about 15 wt% or about 5 to about 10 wt%.

The dope solution also includes at least one solvent. The solvent is preferably a polar aprotic solvent such as N-methyl pyrrolidone (NMP), N,N-dimethyl acetamide (DMAC), dimethyl formamide (DMF), methyl ethyl ketone (MEK), methyl isobutyl ketone (MIBK), cyclohexanone, tetrahydrofuran (THF), methanol, acetone, and dimethyl sulfoxide (DMSO). Some polar protic solvents may be employed as well, as such as, for example, isopropyl alcohol (IPA). The solvent for the blend can be a mixture of these solvents and may also include one or more other liquids that are non-solvents for (C)PVC or the further polymers. The polymers can be mixed with portions of the solvent separately and then mixed, they can be mixed with the solvent sequentially, or the polymers can be mixed with the solvent simultaneously. It

may be desirable to heat the solvent-polymer mixture while mixing or agitating to facilitate complete dissolution of the polymers. The solvent may be present in the dope solution at a concentration of from about 30 to about 90 wt%, or from about 30 to about 70 wt%, or even from about 35 to about 65 wt% or about 40 to about 60 wt%.

The dope solution can also include processing aids, such as surfactants, drying agents, catalysts, co-solvents, such as polar aprotic solvents, or any combination thereof. Among other things, processing aids can be employed to modify surface properties or further increase performance of a flat sheet porous membrane prepared from the dope solution, for example, to improve fouling resistance. When present, the processing aids, collectively, can be in the dope solution at a concentration of about 0.1 to about 10 wt.%, or from about 0.5 to about 8 wt%, or even from about 1 to about 6 wt%.

Exemplary processing aids include phosphoramides, dialkyl sulfoxides, metal chelate additives containing a bidentate ligand and a metal atom or metal ion, e.g., acetylacetonate (acac) or fluorinated acetylacetonate, beta-diketonates or fluorinated beta-diketonates, zeolites, fullerenes, carbon nanotubes, and inorganic mineral compounds.

The surfactant(s) can be selected from among nonionic, cationic, anionic, and zwitterionic surfactants depending on the chemistry of the other additives. For example, a cationic surfactant would not be selected when anionic additives are being used. When present, the amount of surfactant can be from about 0.005 wt % to about 0.5 wt %, or from about 0.01 wt % to about 0.25 wt %, or from about 0.05% to about 0.25%.

In some embodiments, one or more drying agents can be included in the dope solution. Drying agents can include, for example, hydrophobic organic compounds, such as a hydrocarbon or an ether, glycerin, citric acid, glycols, glucose, sucrose, triethylammonium camphorsulfonate, triethylammonium benzenesulfonate, triethylammonium toluenesulfonate, triethylammonium methane sulfonate, ammonium camphor sulfonate, and ammonium benzene sulfonate, and those described in U.S. Pat. Nos. 4,855,048; 4,948,507; 4,983,291; and 5,658,460. When present, the amount of drying agent can be from about 2 wt % to about 10 wt %, or from about 3 wt % to about 5 wt %.

Catalysts can be included in the dope solution as a processing aid. In some embodiments, a catalyst can include diethylamine, triethylamine, ethylene diamine, triethanolamine, diethanolamine, ethanolamine, dimethylaminopyridine, or combinations thereof. In some embodiments, the catalyst can be an acid catalyst or a base catalyst. An acid catalyst can be an inorganic acid, an organic acid, a Lewis acid, or a quaternary ammonium salt or an acid salt of ammonia or a primary, secondary or tertiary amine. When present, the amount of catalyst in the dope solution can be from about 0.001 wt % to about 0.5 wt %, or from about 0.005 wt % to about 0.25 wt %.

## FLAT SHEET POROUS MEMBRANE

In another aspect of the invention, there is provided a flat sheet porous membrane, or simply "membrane" for short. In the art, membranes may be in a tubular, hollow fiber, spiral wound, or flat sheet structure, however as used herein the term "membrane" is used to refer specifically to a porous flat sheet having a selectively permeable barrier or partition. By flat sheet, it means the membrane has a first surface and a second surface opposite to each other, wherein the first surface corresponds to an effluent side and the second surface corresponds to a filtrate side. Such membranes have a number of uses, and in particular for filtration, where permeability is based on the membrane being porous.

The porous flat sheet membrane (or simply "membrane") may be cast from the dope solution as defined in the appended claims to obtain a porous flat sheet membrane having pores suitable for use in microfiltration, ultrafiltration, or nano-filtration end uses. That is to say that the porous flat sheet membrane may have pores suitable for microfiltration ranging in size from about 0.1 to about 10 μm, or about 0.5 to 1 μm; or pores suitable for ultrafiltration ranging in size from about 0.005 to 0.1 μm, or about 0.01 to 0.05 μm; or pores suitable for nano-filtration ranging in size from about 0.00005 to 0.01 μm, or about 0.0001 to 0.005 μm.

The pores in the membrane may be distributed through the membrane symmetrically, meaning the distribution of pores within the membrane are on average of about the same size and spacing, or asymmetrically. The pore structure in an asymmetric membrane exhibits a gradient where the size of the pores gradually change from large pores at the filtrate side of the membrane to small pores at the effluent side. The smaller the pores the more the effluent side layer appears as a "skin" layer on the effluent side of the membrane. Where some asymmetric membranes may have a skin that is integral with the membrane, other asymmetric membranes have a skin that is coated onto a substrate to form the membrane. In either fashion, the asymmetric membrane may have a 0.01-5micron layer over a more porous 100-300micron thick layer. In some embodiments the pores in the asymmetric membrane do not grade out small enough to form a skin layer, in which case the membrane does not contain a skin layer. The membrane provided herein may have an asymmetric structure without a skin layer. The membrane may also have an asymmetric structure with a skin layer. Where the membrane includes a skin layer, the skin layer may be integral to the membrane or coated onto the membrane.

## PROCESS FOR PREPARING THE FLAT SHEET POROUS MEMBRANE

A further aspect of the invention provided is a method for manufacturing a flat sheet porous membrane.

The first step of the method involves preparing the dope solution, as described in the appended claims, by dissolving the ingredients into the dope solution solvents. The dope solution can be prepared at elevated temperature, such as 50 to 60°C to aid in quicker dissolution. After mixing the dope solution is degassed, for example, by application of a vacuum to the solution.

Once the dope solution is prepared, it is cast into a sheet on a flat surface. Casting is a well-known process that, briefly, involves pouring a solution on to a flat surface and using a casting bar having a set gap between the bar and the flat surface to pull the solution over the surface. The solution flows along the flat surface and is deposited into the form of a flat sheet having a thickness commensurate with the gap between the casting bar and the flat surface.

The cast sheet is then subjected to a phase inversion process. Phase inversion is a known process resulting in a controlled transformation of a polymer from a liquid to a solid in a quenching environment.

The term quenching environment means any environment that causes a polymer to precipitate from a dissolved state into a solidified state. The quenching of the cast sheet can occur in a single procedure or in more than one procedure.

The phase inversion process includes, for example, vapor phase precipitation, evaporation and immersion precipitation processes, in which the polymer of the membrane precipitates from a solvent solution in some manner. The specifics of each process are subject to, for example, the types and amounts of solvents employed, and the temperatures used.

The cast sheet can be immersed, either immediately or after some delay, in a quenching environment for a sufficient period to allow phase inversion, such as 1 minute to 4 hours.

For example, the quenching of a cast sheet can involve simply moving the sheet into a coagulation bath of the quenching liquid. In another example, the quenching of a cast sheet can involve exposing the sheet to an atmosphere saturated with the quench liquid, followed by moving the substrate and sheet into a coagulation bath of the quenching liquid. Exposing the shaped membrane precursor to a saturated atmosphere can be accomplished, for example, via a vapor diffusion chamber containing a vapor of the quench liquid, which may be, for example, water or an organic solvent.

The method of phase inversion can contribute to the pore size created in the membrane. Often, a vapor diffusion chamber may be need to prepare ultrafiltration and nanofiltration membranes. In general, the cast flat sheet can be subjected to a vapor diffusion chamber quenching environment for anywhere between 30 seconds to 30 minutes, such as, 45seconds to 20 minutes, or 1 minute to 10 minutes, or 2 minutes to 8 minutes, again, depending on the solvents employed.

In embodiments, the quenching environment contains a liquid that is a non-solvent for the polymer or polymers in the sheet. The term non-solvent, when used in reference to a polymer, means a liquid that, when added to a solution of the polymer in a solvent, will cause phase separation of the solution at some concentration. The quench liquid can include, for example, water as the non-solvent, typically at between about 30 to about 90 wt% of the quench liquid. The quench liquid can also include a solvent selected from any of the same solvents discussed with respect to the doping solution, including, for example, one or more of N,N-dimethyl formamide, cyclohexanone, tetrahydrofuran, methanol, acetone, isopropyl alcohol, N,N-dimethylacetamide, and dimethyl sulfoxide.

After quenching, the prepared flat sheet porous membrane can be washed to remove excess solvent and/or dried.

The membrane may also be subject to further processing. For example, the membrane may be subjected to deposition processes to deposit a thin layer of a coating on the on the top of the membrane. Such deposition processes are known in the art, and include, for example, chemical vapor deposition and thin film deposition.

## METHODS FOR USING THE FLAT SHEET POROUS MEMBRANE

The flat sheet porous membrane can be employed in methods of treating effluent streams by filtering the effluent through the membrane. The effluent stream can be a gas in gas stream, a gas in liquid stream, a liquid in liquid stream, or a suspended solid in liquid stream. Generally, such effluent treating methods require the membrane to withstand pressures of from 0 to 1000 psi, or 0 to 500 psi.

The effluent can be municipal wastewater. In some embodiments, the effluent can be industrial wastewater. The membranes may also be employed to purify drinking water and in food and alcohol purification. The membranes may also be employed to separate oil and water or a gas from a mixture of gases. The effluent can also be a biological stream, such as blood, protein, fermentation by-products, and the like.

The amount of each chemical component described is presented exclusive of any solvent or diluent oil, which may be customarily present in the commercial material, that is, on an active chemical basis, unless otherwise indicated. However, unless otherwise indicated, each chemical or composition referred to herein should be interpreted as being a commercial grade material which may contain the isomers, by-products, derivatives, and other such materials which are normally understood to be present in the commercial grade.

It is known that some of the materials described above may interact in the final formulation, so that the components of the final formulation may be different from those that are initially added. For instance, metal ions (of,

e.g., a detergent) can migrate to other acidic or anionic sites of other molecules. The products formed thereby, including the products formed upon employing the composition of the present invention in its intended use, may not be susceptible of easy description. Nevertheless, all such modifications and reaction products are included within the scope of the present invention; the present invention encompasses the composition prepared by admixing the components described above.

As used herein, the term "about" means that a value of a given quantity is within ±20% of the stated value. In other embodiments, the value is within ±15% of the stated value. In other embodiments, the value is within ±10% of the stated value. In other embodiments, the value is within ±5% of the stated value. In other embodiments, the value is within ±2.5% of the stated value. In other embodiments, the value is within ±1% of the stated value.

Additionally, as used herein, the term "substantially" means that a value of a given quantity is within ±10% of the stated value. In other embodiments, the value is within ±5% of the stated value. In other embodiments, the value is within ±2.5% of the stated value. In other embodiments, the value is within ±1% of the stated value.

The invention herein is useful for filtering effluent streams while exhibiting improved resistance to chemical degradation, which may be better understood with reference to the following examples.

## EXAMPLES

**Sample 1** - 20 wt % CPVC resin (chlorination 65.25%), 2wt% heat stabilizer, 10 wt% polyvinyl pyrrolidine as a pore former aid, and 2wt% impact modifier were dissolved in N-methyl pyrrolidine. The solution was degassed for 6 hours. The solution was casted on a glass plate followed by immersion of the plate in a water bath for 2 h. After that, the membrane was collected from the bath and dried for 12 h at room temperature.

Hydraulic permeability measurement: 50 ml of water was passed through a 47 mm diameter of Sample 1 membrane under different pressures (15-70 psi) under nitrogen. The time required to pass through the membrane was determined and the hydraulic permeability was calculated according to the following equation:

$$Lp = V/P/A/T,$$

where Lp is the hydraulic permeability in m/s-mmHg

V is the volume of water passed through the membrane (50ml)

A is the area of the membrane (1734.94 $mm^2$)

T is the time required for the water to pass through the membrane

P is the pressure applied.

The hydraulic permeability calculations for Sample 1 are provided in the table below.

| Pressure (psi) | Time (s) | Lp (m/s-mmHg) |
|---|---|---|
| 15 | 79 | $3.54X10^{-9}$ |
| 20 | 59 | $3.55X10^{-9}$ |
| 30 | 39 | $3.58X10^{-9}$ |
| 40 | 30 | $3.49X10^{-9}$ |

The differences shown in the table above are considered to be small, such that the hydraulic permeability number is constant at $3.5X10^{-9}$.

**Sample 2** - 23 weight % CPVC resin (chlorination 67.25%), 2% heat stabilizer, 8 wt% polyethylene glycol as a pore former aid, and 2% impact modifier were dissolved in N-methyl pyrrolidine at 60° C. The solution was degassed for 6 hours. The solution was casted on a glass plate and subjected to a vapor chamber for 5 minutes. The plate with the cast solution was then immersed in a water bath for 2 h. The membrane was then collected from the bath and dried for 12 h at room temperature. Hydraulic permeability was calculated to be $3.9X10^{-9}$.

**Sample 3** - 24 weight % CPVC resin (chlorination 67.25%), 2% heat stabilizer, 4 wt% polyethylene glycol as a pore former aid, 3 wt% poloxamer as a pore former aid, and 2wt% impact modifier were dissolved in N-methyl pyrrolidine at 60° C. The solution was degassed for 6 hours. The solution was casted on a plate at room temperature, followed by insertion into a vapor chamber for 5 minutes, and then immersion of the plate into a coagulation bath (water/ THF: 80/20) for

2 h. After that, the membrane was collected from the bath and dried for 12 h at room temperature. Hydraulic permeability was calculated to be $1.0X10^{-12}$.

**Sample 4** - 26 weight % CPVC resin (chlorination 67.25%), 2wt% heat stabilizer, 5 wt% polyethylene glycol as a pore former aid, 2wt% impact modifier, and 4wt% of an aromatic polyether-type thermoplastic polyurethane as hydrophilic substrate, and 2wt% antioxidant 2,6-di-t-butyl-4-methylphenol was dissolved in N-methyl pyrrolidine at 65° C. The solution was degassed for 6 hours. The solution was casted on a warm glass plate (70 ° C) followed by insertion into a vapor chamber for 5 minutes, and then immersion of the plate into a water bath for 2 h. After that, the membrane was collected from the bath and dried for 12 h at room temperature. Hydraulic permeability was calculated to be $3.1X10^{-9}$.

**Sample 5** - A PVDF flat sheet membrane having a pore size of 0.1 μm and a hydraulic permeability of $1.6X10^{-9}$.

**Sample 6** - A PES flat sheet membrane having asymmetric pore sizes of 0.1 μm and a hydraulic permeability of $6.2X10^{-9}$.

**Sample 7** - A Polyamide flat sheet membrane having a pore size of 0.15 μm and a hydraulic permeability of $8.4X10^{-9}$

**Sample 8** - A cellulose acetate ("CA") flat sheet membrane having asymmetric pore size of 0.1 μm and a hydraulic permeability of $8.7X10^{-9}$

**Example 1** - **Fouling characterization of the membrane** - Fouling of the Sample 1 to 4 membranes were characterized by contact angle analysis. First, the "dry" surface of each Sample was characterized by a contact angle analysis. The basic theory behind contact angle analysis is described by Young's equation. When a liquid drop is placed in contact with a surface, the liquid forms a contact angle as a function of surface tension and surface hydrophilicity of the membrane according to Young's equation. If the surface is fouled the surface hydrophilicity changes, along with the contact angle. To measure, clean membranes were rinsed in distilled water and carefully placed over a two-sided adhesive tape in order to prevent the sides of the membrane to roll up. Micro syringes provided with square cut Teflon tips were used to place drop of distill water on the top of membrane surface. The initial contact angle was measured within 5 seconds using a goniometer in conjunction with a 100X telescope. The Samples were then soaked in a protein solution/blood serum for 8 h. After the 8 h soak, the Samples were washed with distilled water three times to remove any unbound proteins and allowed to air dry for 2 hours at room temperature. The protein soaked surfaces were again characterized by contact angle analysis. Change in contact angle or Δ contact angle were used to measure fouling. Results of the contact angle analysis are provided in table 1.

| **Table 1** | Dry Contact Angle | Wet Contact Angle | ΔContact Angle |
|---|---|---|---|
| Sample 1 | 71 | 85 | 14 |
| Sample 2 | 72 | 88 | 16 |
| Sample 3 | 75 | 90 | 15 |
| Sample 4 | 71 | 89 | 27 |
| Sample 5 | 111 | 84 | 27 |
| Sample 6 | 68 | 88 | 20 |
| Sample 7 | 44 | 97 | 53 |

**Example 2 - Cleaning solution/ chemical resistance of the membrane** - Cleaning solution resistances were characterized by a hydraulic permeability measurement. The hydraulic permeability of each Sample was measured by first measuring the amount of time required to pass 50 ml of water through the Sample membrane. The membranes were then dipped in a 4wt% bleach solution for 6 h at room temperature. After 6 hours, the hydraulic permeability of the Sample membranes were measured again. The process of dipping for 6 hours and testing the hydraulic permeability was continued until a noticeable change occurred in the hydraulic permeability. The total time to the first noticeable change was recorded as the time to loss of membrane efficiency.

The process was continued until there was a sharp increase in the hydraulic permeability such that the filtrate passed through the membrane without resistance. The time to the sharp increase in hydraulic permeability was recorded as the complete degradation of the membrane. The loss of efficiency and complete degradation times are set forth in Table 2 below.

| **Table 2** | Loss of Membrane Efficiency (hours) | Complete Degradation of Membrane (hours) |
|---|---|---|
| Sample 1 | 300 | None observed up to 330 h |
| Sample 2 | 310 | None observed up to 330 h |

(continued)

| Table 2 | Loss of Membrane Efficiency (hours) | Complete Degradation of Membrane (hours) |
|---|---|---|
| Sample 3 | 320 | None observed up to 330 h |
| Sample 4 | 325 | None observed up to 330 h |
| Sample 5 | 23 | 230 |
| Sample 8 | 7 | 12 |
| Sample 7 | 15 | 25 |
| Sample 6 | 20 | 133 |

As used herein, the transitional term "comprising," which is synonymous with "including," "containing," or "characterized by," is inclusive or openended and does not exclude additional, un-recited elements or method steps. However, in each recitation of "comprising" herein, it is intended that the term also encompass, as alternative embodiments, the phrases "consisting essentially of" and "consisting of," where "consisting of" excludes any element or step not specified and "consisting essentially of" permits the inclusion of additional un-recited elements or steps that do not materially affect the essential or basic and novel characteristics of the composition or method under consideration.

## Claims

1. A dope solution for preparing a porous flat sheet membrane comprising at least one polymer of vinyl chloride having a chlorine content of 59.0 to 72.0 wt% based on the weight of the polymer, a polyurethane polymer, at least one pore forming agent, and at least one solvent, wherein the polymer of vinyl chloride is chlorinated polyvinyl chloride.

2. The dope solution of claim 1, wherein the pore forming agent comprises at least one of a phenol, salts of alkali metals, salts of alkaline earth metals, salts of transition metals or ammonium with halides or carbonates, polyvinyl pyrolidone, polyethylene glycol, polyethylene-polyethylene oxide copolymer.

3. The dope solution of claim 1, wherein the pore forming agent is present at a concentration of from 1 to 20 wt%.

4. The dope solution of claim 1, wherein the solvent comprises at least one of N-methyl pyrrolidone (NMP), N,N-dimethyl acetamide (DMAC), dimethyl formamide (DMF), methyl ethyl ketone (MEK), or methyl isobutyl ketone (MIBK), cyclohexanone, tetrahydrofuran, methanol, acetone, isopropyl alcohol, and dimethyl sulfoxide.

5. The dope solution of claim 1, where the solvent is present at a concentration of from 30 to 90 wt%.

6. The dope solution of claim 1, wherein the polymer of vinyl chloride is present at a concentration of from 10 to 40 wt%.

7. The dope solution of claim 1, further comprising processing aids such as surfactants, drying agents, catalysts, co-solvents, such as polar aprotic solvents, or any combination thereof.

8. The dope solution of claim 7, wherein the processing aid is present at a concentration of from 0.1 to 10 wt.%.

9. The dope solution of claim 1, further comprising an oligomeric or polymeric additive formed from two or more of: i) a zwitterionic monomer or a polyalkylene glycol monomer; ii) a silicone or fluorocarbon monomer, or combinations thereof; or iii) an alkyl substituted methacrylate, acrylate, acrylamide, or vinyl monomer, or combinations thereof.

10. The dope solution of claim 1, wherein the polyurethane polymer comprises: (a) poly(alkylene oxide) side-chain units in an amount comprising 12 wt. % to 80 wt. % of said polyurethane, wherein (i) alkylene oxide groups in said poly(alkylene oxide) side-chain units have from 2 to 10 carbon atoms and are unsubstituted, substituted, or both unsubstituted and substituted, (ii) at least about 50 wt. % of said alkylene oxide groups are ethylene oxide, and (iii) said amount of said side-chain units is at least about 30 wt. % when the molecular weight of said side-chain units is less than about 600 grams/mole, and (b) poly(ethylene oxide) main-chain units in an amount comprising less than about 25 wt. % of said polyurethane.

**11.** A flat sheet porous membrane comprising a flat sheet cast from the dope solution of any previous claim.

**12.** A method for manufacturing a flat sheet porous membrane comprising

a) preparing the dope solution of any of claims 1 to 10,
b) casting a flat sheet of the doping solution on a surface,
c) immersing the flat sheet of the doping solution in a quenching environment for a sufficient period to allow phase inversion.

**13.** A method of treating an effluent stream, comprising filtering an effluent through a flat sheet porous membrane prepared from a dope solution as claimed in claim 1.

**Patentansprüche**

**1.** Dotiermittellösung zum Herstellen einer porösen flachlagigen Membran, umfassend mindestens ein Polymer von Vinylchlorid, das einen Chlorgehalt von 59,0 bis 72,0 Gew.-% aufweist, bezogen auf das Gewicht des Polymers, ein Polyurethanpolymer, mindestens ein Porenbildungsmittel und mindestens ein Lösungsmittel, wobei das Polymer von Vinylchlorid chloriertes Polyvinylchlorid ist.

**2.** Dotiermittellösung nach Anspruch 1, wobei das Porenbildungsmittel mindestens eines umfasst von einem Phenol, Salzen von Alkalimetallen, Salzen von Erdalkalimetallen, Salzen von Übergangsmetallen oder Ammonium mit Halogeniden oder Carbonaten, Polyvinylpyrolidon, Polyethylenglykol, Polyethylen-Polyethylenoxidcopolymer.

**3.** Dotiermittellösung nach Anspruch 1, wobei das Porenbildungsmittel in einer Konzentration von 1 bis 20 Gew.-% vorhanden ist.

**4.** Dotiermittellösung nach Anspruch 1, wobei das Lösungsmittel mindestens eines umfasst von N-Methylpyrrolidon (NMP), N,N-Dimethylacetamid (DMAC), Dimethylformamid (DMF), Methylethylketon (MEK) oder Methylisobutylketon (MIBK), Cyclohexanon, Tetrahydrofuran, Methanol, Aceton, Isopropylalkohol und Dimethylsulfoxid.

**5.** Dotiermittellösung nach Anspruch 1, wobei das Lösungsmittel in einer Konzentration von 30 bis 90 Gew.-% vorhanden ist.

**6.** Dotiermittellösung nach Anspruch 1, wobei das Vinylchloridpolymer in einer Konzentration von 10 bis 40 Gew.-% vorhanden ist.

**7.** Dotiermittellösung nach Anspruch 1, ferner umfassend Verarbeitungshilfsmittel wie Tenside, Trocknungsmittel, Katalysatoren, Co-Lösungsmittel wie polare aprotische Lösungsmittel oder eine beliebige Kombination davon.

**8.** Dotiermittellösung nach Anspruch 7, wobei das Verarbeitungshilfsmittel in einer Konzentration von 0,1 bis 10 Gew.-% vorhanden ist.

**9.** Dotiermittellösung nach Anspruch 1, ferner umfassend ein oligomeres oder polymeres Additiv, das aus zwei oder mehreren gebildet ist von: i) einem zwitterionischen Monomer oder einem Polyalkylenglykolmonomer; ii) einem Silikon- oder Fluorcarbonmonomer oder Kombinationen davon; oder iii) einem alkylsubstituierten Methacrylat, Acrylat, Acrylamid oder Vinylmonomer oder Kombinationen davon.

**10.** Dotiermittellösung nach Anspruch 1, wobei das Polyurethanpolymer umfasst: (a) Poly(alkylenoxid)-Seitenketteneinheiten in einer Menge, umfassend zu 12 Gew.-% bis 80 Gew.-% das Polyurethan, wobei (i) Alkylenoxidgruppen in den Poly(alkylenoxid)-Seitenketteneinheiten von 2 bis 10 Kohlenstoffatome aufweisen und unsubstituiert, substituiert oder sowohl unsubstituiert als auch substituiert sind, (ii) mindestens etwa 50 Gew.-% der Alkylenoxidgruppen Ethylenoxid sind und (iii) die Menge der Seitenketteneinheiten mindestens etwa 30 Gew.-% beträgt, wenn das Molekulargewicht der Seitenketteneinheiten weniger als etwa 600 Gramm/Mol beträgt, und (b) Poly(ethylenoxid)-Hauptketteneinheiten in einer Menge, umfassend zu weniger als etwa 25 Gew.-% das Polyurethan.

**11.** Flachlagige poröse Membran, umfassend eine flache Lage, die aus der Dotiermittellösung nach einem der vorstehenden Ansprüche gegossen wird.

**12.** Verfahren zum Herstellen einer flachlagigen porösen Membran, umfassend

a) Herstellen der Dotiermittellösung nach einem der Ansprüche 1 bis 10,
b) Gießen einer flachen Lage der Dotierlösung auf eine Oberfläche,
c) Eintauchen der flachen Lage in die Dotierlösung in einer Abschreckumgebung für einen ausreichend langen Zeitraum, um eine Phasenumkehr zu ermöglichen.

**13.** Verfahren zum Behandeln eines Abwasserstroms, umfassend ein Filtern eines Abwassers durch eine flachlagige poröse Membran, die aus einer Dotiermittellösung nach Anspruch 1 hergestellt wird.

**Revendications**

**1.** Solution de dopage pour la préparation d'une membrane poreuse en feuille plate comprenant au moins un polymère de chlorure de vinyle ayant une teneur en chlore de 59,0 à 72,0 % en poids par rapport au poids du polymère, un polymère de polyuréthane, au moins un agent de formation de pores et au moins un solvant, dans laquelle le polymère de chlorure de vinyle est du chlorure de polyvinyle chloré.

**2.** Solution de dopage selon la revendication 1, dans laquelle l'agent de formation des pores comprend au moins un phénol, des sels de métaux alcalins, des sels de métaux alcalino-terreux, des sels de métaux de transition ou d'ammonium avec des halogénures ou des carbonates, de la pyrolidone de polyvinyle, du polyéthylène glycol, du copolymère d'oxyde de polyéthylène et d'oxyde de polyéthylène.

**3.** Solution de dopage selon la revendication 1, dans laquelle l'agent de formation des pores est présent à une concentration de 1 à 20 % en poids.

**4.** Solution de dopage selon la revendication 1, dans laquelle le solvant comprend au moins un parmi N-méthyl pyrrolidone (NMP), N,N-diméthyl acétamide (DMAC), diméthyl formamide (DMF), méthyl éthyl cétone (MEK), ou méthyl isobutyl cétone (MIBK), cyclohexanone, tétrahydrofurane, méthanol, acétone, alcool isopropylique et sulfoxyde de diméthyle.

**5.** Solution de dopage selon la revendication 1, où le solvant est présent à une concentration de 30 à 90 % en poids.

**6.** Solution de dopage selon la revendication 1, dans lequel le polymère de chlorure de vinyle est présent à une concentration de 10 à 40 % en poids.

**7.** Solution de dopage selon la revendication 1, comprenant en outre des auxiliaires de traitement tels que des surfactants, des agents de séchage, des catalyseurs, des co-solvants, tels que des solvants aprotiques polaires, ou toute combinaison de ceux-ci.

**8.** Solution de dopage selon la revendication 7, dans laquelle l'auxiliaire de fabrication est présent à une concentration de 0,1 à 10 % en poids.

**9.** Solution de dopage selon la revendication 1, comprenant en outre un additif oligomérique ou polymérique formé à partir de deux ou plusieurs parmi : i) un monomère zwitterionique ou un monomère de polyalkylène glycol ; ii) un monomère silicone ou d'hydrocarbure fluoré, ou des combinaisons de ceux-ci ; ou iii) un méthacrylate, un acrylate, un acrylamide ou un monomère de vinyle substitué par un alkyle, ou des combinaisons de ceux-ci.

**10.** Solution de dopage selon la revendication 1, dans laquelle le polymère de polyuréthane comprend : (a) des unités de chaînes latérales de poly(oxyde d'alkylène) dans une quantité allant de 12 % en poids à 80 % en poids dudit polyuréthane, dans laquelle (i) les groupes d'oxyde d'alkylène dans lesdites unités de chaînes latérales de poly(oxyde d'alkylène) ont de 2 à 10 atomes de carbone et sont non substitués, substitués ou à la fois non substitués et substitués, (ii) au moins 50 % en poids desdits groupes d'oxyde d'alkylène sont de l'oxyde d'éthylène, et (iii) ladite quantité desdites unités de chaînes latérales est d'au moins 30 % en poids lorsque le poids moléculaire desdites unités de chaînes latérales est inférieur à environ 600 grammes/mole, et (b) des unités de chaîne principale de poly(oxyde d'éthylène) en une quantité représentant moins de 25 % en poids dudit polyuréthane.

**11.** Membrane poreuse de feuille plate comprenant une feuille plate coulée à partir de la solution de dopage selon l'une

quelconque revendication précédente.

**12.** Procédé de fabrication d'une membrane poreuse de feuille plate comprenant

a) la préparation de la solution de dopage selon l'une quelconque des revendications 1 à 10,
b) le coulage d'une feuille plate de la solution de dopage sur une surface,
c) l'immersion de la feuille plate de la solution de dopage dans un environnement de trempe pendant une période suffisante pour permettre l'inversion de phase.

**13.** Procédé de traitement d'un flux d'effluents, comprenant la filtration d'un effluent à travers une membrane poreuse de feuille plate préparée à partir d'une solution de dopage selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 102151491
- CN 105251370
- EP 2974786 A
- WO 2106172460 A1
- WO 0208327 A1
- US 4855048 A
- US 4948507 A
- US 4983291 A
- US 5658460 A